# EUROPÄISCHE PATENTSCHRIFT

(11) **EP 2 108 571 B1**
(45) Veröffentlichungstag und Bekanntmachung des Hinweises auf die Patenterteilung: **25.08.2010**
(21) Anmeldenummer: 09003198.0
(22) Anmeldetag: 05.03.2009
(51) Int. Cl.: B62D 51/02, B62D 49/00, B66F 9/075

(54) **Schlepper**
Tractor
Tracteur

(30) Priorität: 11.04.2008 DE 102008018376
(43) Veröffentlichungstag der Anmeldung: 14.10.2009
(73) Patentinhaber: STILL SAS, 77716 Marne La Vallée Cedex 4 (FR)
(72) Erfinder: Bayle, Mathilde, 60250 Bury (FR); Gallet, Jean-Paul, 60660 Cires Les-Mello (FR); Brouart, Francois, 60880 Armancourt (FR)
(74) Vertreter: Geirhos, Johann

(56) Entgegenhaltungen:
- WO-A2-03/084772
- DE-A1-102006 022 744
- DE-A1-102006 022 746
- FR-A1- 2 861 676

## Beschreibung

Die Erfindung betrifft einen Schlepper mit einem frontseitigen Rahmenabschnitt, an dem ein zumindest ein Antriebsrad umfassender Antriebsteil, ein Batteriefach für eine Energieversorgungseinheit und ein von einer Fahrerstandplattform ausgebildeter Bedienplatz für eine Bedienperson ausgebildet ist. Dokument DE 10 2006 022 746 beschreibt einen solchen Schlepper.

Gattungsgemäße Schlepper sind häufig von Niederhubwagen oder Niederhubkommissionierern abgeleitet. Dies bedeutet, dass die Schlepper hinsichtlich der Bedienanordnung, des Fahrantriebs, der Anordnung einer Energieversorgungseinheit und hinsichtlich einer gegebenenfalls vorhandenen Fahrerstandplattform dem Aufbau eines Niederhubwagens bzw. Niederhubkommissionierers entsprechen. Hingegen weisen die Schlepper anstelle einer anhebbaren, mit Lastrollen versehenen Lastgabel im heckseitigen Bereich eine vertikale Rahmenwand und eine Anhängevorrichtung sowie zwei Hinterräder auf.

An die Anhängevorrichtung können ein oder mehrere nicht angetriebene, beispielsweise als Transportwagen oder Anhänger ausgebildete Transportbehälter angehängt werden. Die zum Fahren erforderliche Zugkraft wird dann von dem Schlepper erzeugt. Die Bedienperson des Schleppers befindet sich dabei auf der Fahrerstandplattform des Schleppers, die benachbart zu der Rahmenwand angeordnet ist.

Durch die Anordnung der Anhängevorrichtung sowie der Hinterräder weisen derartige Schlepper einen hohen Bauaufwand auf, da der frontseitige Rahmenabschnitt entsprechend abgeändert und an die Anforderungen eines Schleppers angepasst werden muss.

Der vorliegenden Erfindung liegt die Aufgabe zugrunde, einen gattungsgemäßen Schlepper zur Verfügung zu stellen, der einen geringen Bauaufwand aufweist und auf einfache Weise herstellbar ist.

Die Aufgabe wird erfindungsgemäß dadurch gelöst, dass ein heckseitiger Rahmenabschnitt vorgesehen ist, der mit einem Befestigungsflansch für eine Anhängevorrichtung sowie Befestigungsflanschen für Radträger von Hinterrädern versehen ist, wobei der heckseitige Rahmenabschnitt mit einem Befestigungsflansch zur direkten oder indirekten Befestigung des heckseitigen Rahmenabschnitt an dem frontseitigen Rahmenabschnitt versehen ist.

Mit einem derartigen heckseitigen Rahmenabschnitt, an dem mittels der entsprechenden Befestigungsflansche die Hinterräder sowie die Anhängevorrichtung angeordnet werden können und der direkt oder indirekt mittels eines weiteren Befestigungsflansches an dem frontseitigen Rahmenabschnitt befestigt ist, sind an dem frontseitigen Rahmenabschnitt keine Änderungen erforderlich, wodurch ein erfindungsgemäßer Schlepper einen geringen Bauaufwand aufweist. Der heckseitige Rahmenabschnitt kann hierbei weiterhin mit den Radträgern und der Anhängevorrichtung vormontiert werden und mittels des Befestigungsflansches an dem vorderen Rahmenabschnitt befestigt werden, wobei weiterhin die Herstellung des erfindungsgemäßen Schleppers vereinfacht wird. Zudem ermöglicht die Ausgestaltung des heckseitigen Rahmenabschnitts mit einem Befestigungsflansch für eine Anhängevorrichtung sowie Befestigungsflanschen für die Radträger einen modularen Aufbau des Schlepperhecks, da an die Befestigungsflansche für die Radträger verschiedene Radträger und/oder unterschiedliche Hinterräder sowie an dem Befestigungsflansch für die Anhängevorrichtung unterschiedliche Anhängevorrichtung auf einfache Weise angeordnet werden können. Hierdurch kann ein erfindungsgemäßer Schlepper auf einfache Weise mit einer mechanischen oder einer automatischen Anhängevorrichtung sowie mit unterschiedlichen Hinterradtypen, beispielsweise Kunststoffrollen für den Einsatz des Schleppers in geschlossenen Hallen oder Gummirädem für den Einsatz des Schleppers außerhalb geschlossener Hallen auf unebenen Fahrbahnbelägen, ausgestattet werden, wodurch unterschiedliche Schleppervarianten mit geringem Bauaufwand in modularer Weise herstellbar sind.

Gemäß einer bevorzugten Ausgestaltungsform der Erfindung sind die Seitenwände des heckseitigen Rahmenabschnitts als Schutzbleche der Hinterräder ausgebildet. Hierdurch können auf einfache Weise die Hinterräder geschützt in dem heckseitigen Rahmenabschnitt angeordnet werden.

Zweckmäßigerweise sind im Bereich der Seitenwände jeweils ein Befestigungsflansch für einen Fußschutz der Hinterräder ausgebildet, wodurch sich für die Montage eines Fußschutzes für die Hinterräder ein geringer Bauaufwand ergibt.

Der Befestigungsflansch zur direkten oder indirekten Befestigung des heckseitigen Rahmenabschnitts an dem frontseitigen Rahmenabschnitt ist gemäß einer bevorzugten Ausführungsform der Erfindung von zumindest einem oberen Befestigungspunkt und zumindest einem unteren Befestigungspunkt gebildet ist. Mit derartigen Befestigungspunkten kann auf einfache Weise eine sichere Befestigung des heckseitigen Rahmenabschnitts erzielt werden, mit der die erforderlichen Zugkräfte sicher übertragen werden können.

Jeder Befestigungspunkt weist hierbei gemäß einer bevorzugten Ausgestaltungsform der Erfindung zumindest eine Gewindebohrung für eine Verschraubung auf. Mit derartigen Gewindebohrungen für eine Verschraubung kann der Befestigungsflansch auf einfache Weise gebildet werden.

Gemäß einer vorteilhaften Ausgestaltungsform der Erfindung ist der Befestigungsflansch für die Anhängevorrichtung von zwei seitlich beabstandeten vertikalen Befestigungsleisten gebildet. Mit einem derartigen Befestigungsflansch können auf einfache Weise unterschiedliche Typen von Anhängevorrichtungen an dem heckseitigen Rahmenabschnitt in modularer Weise befestigt werden.

Sofern hierbei jede Befestigungsleiste zumindest eine Gewindebohrung für eine Verschraubung aufweist, kann der Befestigungsflansch auf einfache Weise gebildet werden und eine Anordnung der Anhängevorrichtung auf unterschiedlichen Höhen auf einfache Weise erzielt werden.

Der Befestigungsflansch für die Radträger ist gemäß einer bevorzugten Ausgestaltungsform der Erfindung von jeweils einem Befestigungskranz gebildet, der zumindest eine Gewindebohrung für eine Verschraubung aufweist. Mit einem derartigen von Gewindebohrungen gebildeten Befestigungskranz können auf einfache Weise verschiedene Radträger an den heckseitigen Rahmenabschnitt in modularer Weise angeordnet werden.

Besondere Vorteile ergeben sich, wenn der heckseitige Rahmenabschnitt gemäß einer Weiterbildung der Erfindung als Gußbauteil ausgebildet ist. Ein derartiger heckseitiger Rahmenabschnitt, der gleichzeitig ein Gegengewicht bildet, ist auf einfache Weise herstellbar und mit den entsprechenden Befestigungsflanschen versehbar.

Der heckseitige Rahmenabschnitt kann hierbei an einer vertikalen Rahmenwand des frontseitigen Rahmenabschnitts mittels des Befestigungsflansches befestigbar sein, wodurch eine direkte Befestigung des heckseitigen Rahmenabschnitts an dem frontseitigen Rahmenabschnitt erzielbar ist.

Aufgrund der Teilung des Rahmens in einen frontseitigen Rahmenabschnitt sowie einen heckseitigen Rahmenabschnitt ist es jedoch ebenfalls möglich, dass der heckseitige Rahmenabschnitt an einem Zwischenrahmenabschnitt mittels des Befestigungsflansches befestigbar ist, wobei der Zwischenrahmenabschnitt an dem frontseitigen Rahmenabschnitt, insbesondere der vertikalen Rahmenwand des frontseitigen Rahmenabschnitt mittels eines zum Befestigungsflansch des heckseitigen Rahmenabschnittes identischen Befestigungsflansches, befestigbar ist. Hierdurch ergibt sich eine indirekte Befestigung des heckseitigen Rahmenabschnittes, wobei durch unterschiedliche Zwischenrahmenabschnitte auf einfache Weise verschiedene Varianten von Schleppern hergestellt werden können. Sofern der Zwischenrahmenabschnitt mit einem zu dem Befestigungsflansch des heckseitigen Rahmenabschnitts identischen Befestigungsflansch versehen ist, mit dem der Zwischenrahmenabschnitt an der vertikalen Rahmenwand des frontseitigen Befestigungsflansches befestigbar ist, ergibt sich ein geringer Bauaufwand, da an der vertikalen Rahmenwand entweder direkt der heckseitige Rahmenabschnitt oder der Zwischenrahmenabschnitt mit identischen Befestigungsflanschen im Rahmen einer modularen Bauweise befestigt werden kann.

Der Zwischenrahmenabschnitt kann hierbei gemäß einer Ausgestaltungsform der Erfindung ein Ablagefach aufweisen, das mittels eines Deckels, insbesondere eines klappbaren Deckels, verschließbar ist. Hierdurch kann auf einfache Weise ein Schlepper mit einem von dem Ablagefach gebildeten Stauraum erzielt werden, in dem Werkzeug, Zubehör, beispielsweise eine Wechselvorrichtung für die Energieversorgungseinheit, oder persönliche Gegenstände der Bedienperson mitgeführt werden können. Der Deckel kann hierbei in der heruntergeklappten Stellung weiterhin als Ladefläche genutzt werden.

Gemäß einer weiteren Ausgestaltungsform kann der Zwischenrahmenabschnitt mit einer Auflagefläche für eine Palette versehen sein. Hierdurch kann auf einfache Weise eine Palette auf dem erfindungsgemäßen Schlepper mitgeführt werden, womit beispielsweise der Schlepper für Kommissionierarbeiten genutzt werden kann.

Weitere Vorteile und Einzelheiten der Erfindung werden anhand der in den schematischen Figuren dargestellten Ausführungsbeispiele näher erläutert. Hierbei zeigt
- Figur 1: einen erfindungsgemäßen Schlepper in einer perspektivischen Ansicht von hinten,
- Figur 2: den heckseitigen Rahmenabschnitt in einer perspektivischen Darstellung.
- Figur 3: den heckseitigen Rahmenabschnitt in einer Montagestellung an der vertikalen Rahmenwand des frontseitigen Rahmenabschnitts,
- Figur 4: eine erste Ausführungsform eines erfindungsgemäßen Schleppers,
- Figur 5: eine zweite Ausführungsform eines erfindungsgemäßen Schleppers und
- Figur 6: eine dritte Ausführungsform eines erfindungsgemäßen Schleppers.

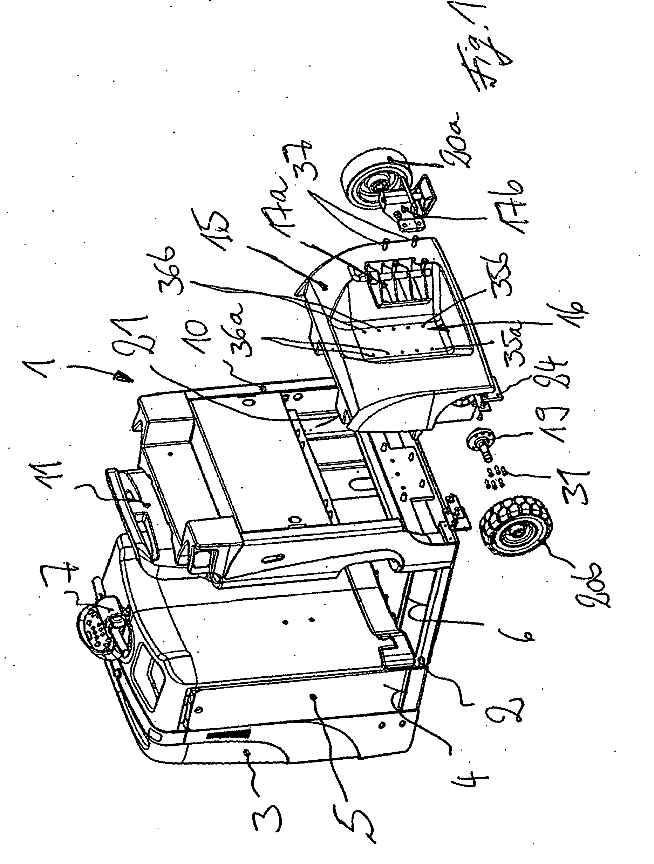

Die Figur 1 zeigt einen erfindungsgemäßen Schlepper 1 in einer Ansicht von hinten. Der Schlepper 1 weist in Fahrtrichtung gesehen einen frontseitigen Rahmenabschnitt 2 auf, an dem ein Antriebsteil 3 ausgebildet ist, in welchem sich beispielsweise ein lenkbares Antriebsrad, ein elektrischer Fahrantriebsmotor, eine Betriebsbremse und eine Leistungselektronikeinheit befinden.

Angrenzend an den Antriebsteil 3 ist an dem frontseitigen Rahmenabschnitt 2 ein Batteriefach 4 mit einer darin angeordneten Energieversorgungseinheit 5, beispielsweise einem Batterieblock, ausgebildet. An das Batteriefach 4 grenzt ein von einer Fahrerstandplattform 6 gebildeter Bedienplatz für eine stehende Bedienperson an, der ebenfalls an dem frontseitigen Rahmenabschnitt 2 ausgebildet ist. Während des Fahrens erfolgt die Bedienung des Schleppers 1 über eine tenkerähnliche Bedienanordnung 7, die sich vorteilhafterweise vertikal über dem Batteriefach 4 befindet. Mit der Bedienanordnung 7 können insbesondere die Lenkung und der Fahrantrieb des Schleppers 1 gesteuert werden.

Im hinteren Bereich der Fahrerstandplattform 6 ist an dem frontseitigen Rahmenabschnitt 2 eine vertikale Rahmenwand 10 ausgebildet, an der eine beispielsweise als Stehsitz oder Rückenpolster ausgebildete Anlehnhilfe 11 angeordnet ist. Insbesondere während des Fahrens kann sich die Bedienperson an der Anlehnhilfe 11 anlehnen und einen Teil ihrer Gewichtskraft an der Anlehnhilfe 11 stützen. Dies verhindert ein schnelles Ermüden der Bedienperson und gewährleistet darüber hinaus einen sicheren Stand der Bedienperson auf der Fahrerstandplattform 1.

Erfindungsgemäß ist ein heckseitiger Rahmenabschnitt 15 vorgesehen, der mit einem Befestigungsflansch 16 für verschiedene Anhängekupplungen 17a, 17b sowie Befestigungsflanschen 18 für verschiedene Radträger 19 und somit verschiedene Hinterräder 20a, 20b versehen.

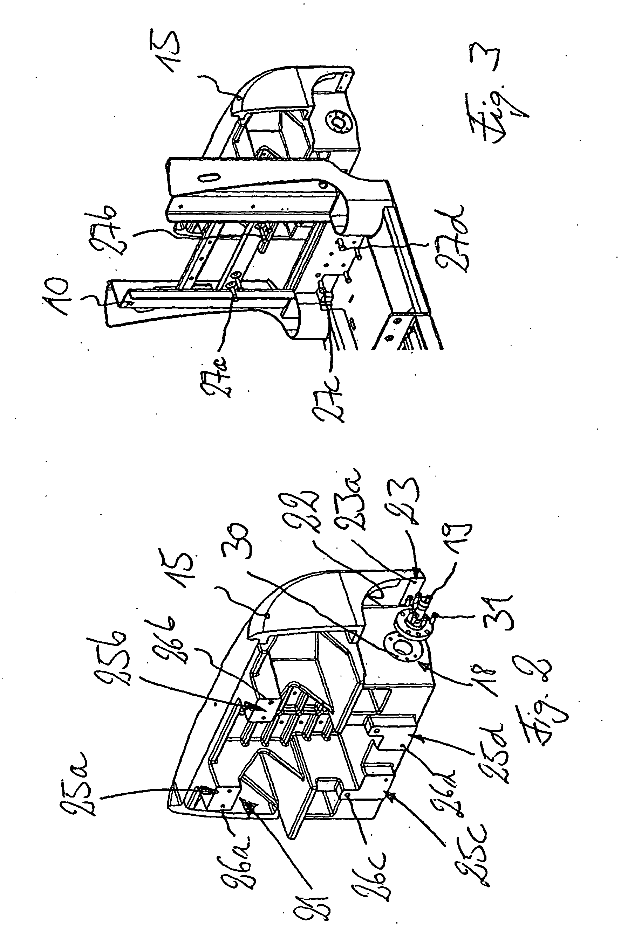

Der heckseitige Rahmenabschnitt 15 ist hierbei - wie in Verbindung mit der Figur 2 ersichtlich ist - als Gußbauteil ausgebildet und mit einem Befestigungsflansch 21 zur direkten oder indirekten Befestigung an dem frontseitigen Rahmenabschnitt 2 versehen.

Die Ausbildung des heckseitigen Rahmenabschnittes 15 als Gußbauteil ermöglicht hierbei auf einfache Weise, die Seitenwände als beispielsweise kreissegmentförmige Schutzbleche 22 für die Hinterräder 20a, 20b auszubilden.

Am unteren Bereich der Schutzbleche 22 ist hierbei jeweils ein Befestigungsflansch 23 für eine in der Figur 1 dargestellten Fußschutz 24 für die Hinterräder 20a, 20b ausgebildet. Der Befestigungsflansch 23 kann hierbei von Gewindebohrungen 23a für Befestigungsschrauben gebildet sein.

Der Befestigungsflansch 21 weist zwei seitlich und somit in Fahrzeugquerrichtung beabstandete obere Befestigungspunkte 25, 25b und zwei seitlich beabstandeten untere Befestigungspunkt 25c, 25d auf, die von entsprechenden vertikalen Flanschplatten an dem Gußbauteil gebildet sind. Jeder Befestigungspunkt 25a, 25b, 25c, 25d ist hierbei mit zumindest einer Gewindebohrung 26a, 26b, 26c, 26d für entsprechende Befestigungsschrauben 27a, 27b, 27c, 27d versehen, die in der Figur 3 dargestellt sind. In der vertikalen Rahmenwand 10 des frontseitigen Rahmenabschnitts 2 sind hierbei für die Befestigungsschrauben 27a, 27b, 27c, 27d entsprechende Durchgangsbohrungen angeordnet, die beispielsweise in entsprechenden Querstreben ausgebildet sind.

Die Befestigungsflansche 18 für die Radträger 19 sind von jeweils einem mehrere Gewindebohrungen enthaltenden kreisförmigen Befestigungskranz 30 gebildet, wodurch die Radträger 19 mittels entsprechender Befestigungsschrauben 31 an dem heckseitigen Rahmenabschnitt 15 befestigt werden können.

Der Befestigungsflansch 16 für die Anhängevorrichtung 17a bzw.17b ist - wie in der Figur 1 gezeigt ist - von zwei seitlich beabstandeten vertikalen Befestigungsleisten 35a, 35b gebildet, die jeweils zumindest eine Gewindebohrung 36a, 36b umfassen. Die Anhängevorrichtung 17a, 17b kann somit mittels entsprechender Befestigungsschrauben 37 an dem heckseitigen Rahmenabschnitt in verschiedenen Höhen befestigt werden.

Mittels des Befestigungsflansches 16 können hierbei verschiedene Anhängevorrichtungen 17a, 17b an dem heckseitigen Rahmenabschnitt 15 angeordnet werden, beispielsweise eine manuell betätigte Anhängevorrichtung 17a oder eine automatische Anhängevorrichtung 17b gezeigt.

Die Befestigungsflansche 18 ermöglichen es weiterhin auf einfache Weise, verschiedene Radträger 19 bzw. verschiedene Hinterräder 20a, 20b an dem heckseitigen Rahmenabschnitt 15 anzuordnen. In der Figur 1 ist beispielsweise ein als Kunststoffrolle ausgebildetes Hinterrad 20a gezeigt, das für den Einsatz des Schleppers 1 in geschlossenen Hallen auf ebenen Fahrbahnbelägen geeignet ist. Zudem kann für den Einsatz des Schleppers 1 außerhalb geschlossener Hallen auf unebenen Fahrtbahnbelägen der Schlepper 1 mit einem als Gummirad ausgebildeten Antriebsrad und als Gummirädem ausgebildeten Hinterrädern 20b ausgerüstet werden, die beispielsweise als Vollgummiräder mit einem Blockprofil ausgebildet sind. Durch entsprechende Radträger 19 und/oder Hinterräder 20b kann somit auf einfache Weise ein Schlepper 1 für den Einsatz außerhalb geschlossner Hallen hergestellt werden, der mit einer erhöhten Bodenfreiheit von beispielsweise 70mm und einem vorderen bzw. hinteren vergrößerten Böschungswinkel im Bereich von beispielsweise 22° bis 27° versehen ist, um das Überfahren und Durchfahren von Hindernissen zu ermöglichen.

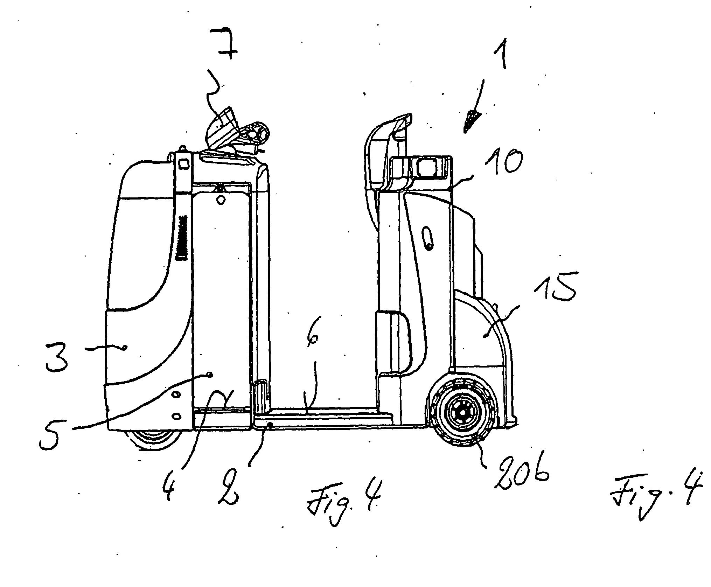

Mittels des Befestigungsflansches 21 kann hierbei der heckseitige Rahmenabschnitt 15 direkt mittels der Befestigungsschrauben 27a, 27b, 27c, 27d - wie in der Figur 3 gezeigt - an der vertikalen Rahmenwand 10 und somit dem frontseitigen Rahmenabschnitt 2 befestigt werden. Ein derartiger Schlepper 1 ist in der Figur 4 dargestellt.

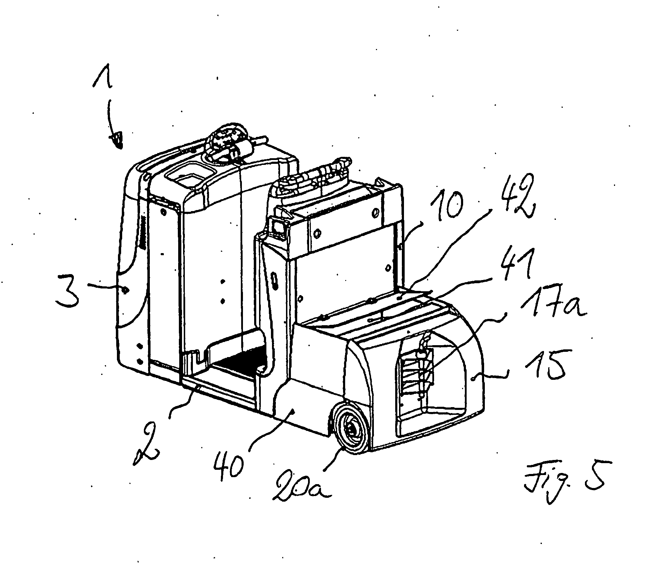

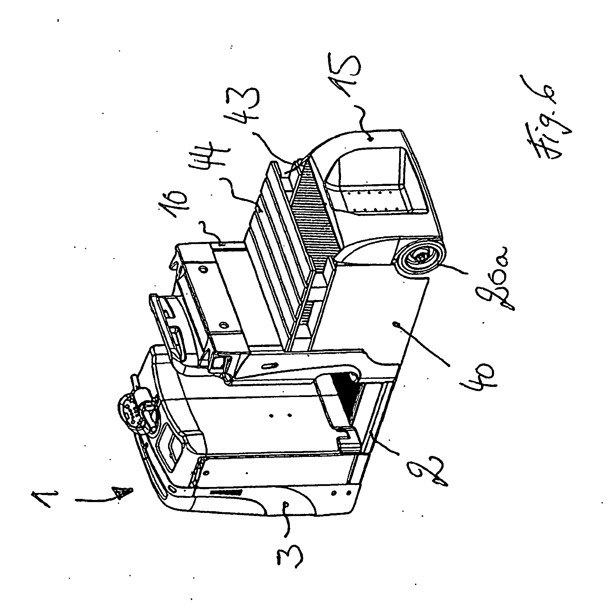

Zudem ermöglicht es die Aufteilung des Rahmens des Schleppers 1 in einen frontseitigen Rahmenabschnitt 2 und einen heckseitigen Rahmenabschnitt 15, dass der heckseitige Rahmenabschnitt 15 mittels des Befestigungsflansches 21 - wie in den Figuren 5 und 6 dargestellt - an einem Zwischenrahmenabschnitt 40 befestigt ist. Der Zwischenrahmenabschnitt 40 kann hierbei mit einem zum Befestigungsflansch 21 identischen Befestigungsflansch versehen werden, der auf einfache Weise die Befestigung des Zwischenrahmenabschnittes 40 mittels der Befestigungsschrauben 27a, 27b, 27c, 27d an der vertikalen Rahmenwand 10 ermöglicht.

Der Zwischenrahmenabschnitt 40 kann hierbei gemäß der Ausbildungsform der Figur 5 mit einem Ablagefach 41 versehen sein, das mittels eines klappbaren Deckels 42 verschließbar ist. Bei geschlossenem Deckel 42 wird hierbei weiterhin eine Ladefläche zur Verfügung gestellt.

Gemäß der Figur 6 kann der Zwischenrahmenabschnitt 40 weiterhin mit einer Auflagefläche 43 für eine Palette 44 versehen werden, wodurch mit dem Schlepper 1 Kommissionierarbeiten durchgeführt werden können.

Mittels verschiedener Zwischenrahmenabschnitte 40 können somit auf einfache Weise verschiedene Schleppervarianten hergestellt werden.

Durch verschieden lange Zwischenrahmenabschnitte 40 kann hierbei weiterhin auf einfache Weise der Radstand des Schleppers 1 verändert werden.

Die Aufteilung des Rahmens des Schleppers 1 in einen frontseitigen Rahmenabschnitt und einen erfindungsgemäßen heckseitigen Rahmenabschnitt 15, der gleichzeitig ein Gegengewicht bildet, ermöglicht somit auf einfache Weise einen modularen Aufbau des Schlepperhecks. Der heckseitige Rahmenabschnitt 15 weist hierbei aufgrund der Ausbildung als Gußbauteil wenige Bauteile auf und ermöglicht eine einfache und kostengünstige Montage des Schleppers 1. Aufgrund des modularen Aufbaus des Schlepperhecks mittels des heckseitigen Rahmenabschnitts 15 ist es auf einfache Weise möglich, verschiedene Anhängevorrichtungen 17a, 17b und verschiedene Hinterräder 20a, 20b vorzusehen, wodurch verschiedene Schleppervarianten auf einfache Weise hergestellt werden können. Zudem ist eine direkte Befestigung des heckseitigen Abschnitt 15 an der vertikalen Rahmenwand 10 oder eine indirekte Befestigung des heckseitige Rahmenwand 15 unter Zwischenschaltung von verschiedenen Zwischenrahmenabschnitten 40 möglich, wodurch die Variantenzahl des erfindungsgemäßen Schleppers 1 weiterhin auf einfache Weise bei einem geringen Herstellaufwand erhöht werden kann.

## Patentansprüche

1. Schlepper (1) mit einem frontseitigen Rahmenabschnitt (2), an dem ein zumindest ein Antriebsrad umfassender Antriebsteil (3), ein Batteriefach (4) für eine Energieversorgungseinheit (5) und ein von einer Fahrerstandplattform (6) ausgebildeter Bedienplatz für eine Bedienperson ausgebildet ist, **dadurch gekennzeichnet, dass** ein heckseitiger Rahmenabschnitt (15) vorgesehen ist, der mit einem Befestigungsflansch (16) für eine Anhängevorrichtung (17a; 17b) sowie Befestigungsflanschen (18) für Radträger (19) von Hinterrädern (20a; 20b) versehen ist, wobei der heckseitige Rahmenabschnitt (15) mit einem Befestigungsflansch (21) zur direkten oder indirekten Befestigung des heckseitigen Rahmenabschnitt (15) an dem frontseitigen Rahmenabschnitt (2) versehen ist.

2. Schlepper nach Anspruch 1, **dadurch gekennzeichnet, dass** die Seitenwände des heckseitige Rahmenabschnitts (15) als Schutzbleche (22) der Hinterräder (20a; 20b) ausgebildet sind.

3. Schlepper nach Anspruch 1 oder 2, **dadurch gekennzeichnet, dass** im Bereich der Seitenwände jeweils ein Befestigungsflansch (23) für einen Fußschutz (24) der Hinterräder (20a; 20b) ausgebildet ist.

4. Schlepper nach einem der Ansprüche 1 bis 3, **dadurch gekennzeichnet, dass** der Befestigungsflansch (21) zur direkten oder indirekten Befestigung an dem frontseitigen Rahmenabschnitt (2) von zumindest einem oberen Befestigungspunkt (25a; 25b) und zumindest einem unteren Befestigungspunkt (25c; 25d) gebildet ist.

5. Schlepper nach Anspruch 4, **dadurch gekennzeichnet, dass** jeder Befestigungspunkt (25a; 25b; 25c; 25d) zumindest eine Gewindebohrung (26a; 26b; 26c; 26d) für eine Verschraubung aufweist.

6. Schlepper nach einem der Ansprüche 1 bis 5, **dadurch gekennzeichnet, dass** der Befestigungsflansch (16) für die Anhängevorrichtung (17a; 17b) von zwei seitlich beabstandeten vertikalen Befestigungsleisten (35a, 35b) gebildet ist.

7. Schlepper nach Anspruch 6, **dadurch gekennzeichnet, dass** jede Befestigungsleiste (35a, 35b) zumindest eine Gewindebohrung (36a, 36b) für eine Verschraubung aufweist.

8. Schlepper nach einem der Ansprüche 1 bis 7, **dadurch gekennzeichnet, dass** der Befestigungsflansch (18) für die Radträger (19) jeweils einen Befestigungskranz (30) aufweist, der zumindest eine Gewindebohrung für eine Verschraubung aufweist.

9. Schlepper nach einem der Ansprüche 1 bis 8, **dadurch gekennzeichnet, dass** der heckseitige Rahmenabschnitt (15) als Gußbauteil ausgebildet ist.

10. Schlepper nach einem der Ansprüche 1 bis 9, **dadurch gekennzeichnet, dass** der heckseitige Rahmenabschnitt (15) an einer vertikalen Rahmenwand (10) des frontseitigen Rahmenabschnitt (2) mittels des Befestigungsflansches (21) befestigbar ist.

11. Schlepper nach einem der Ansprüche 1 bis 9, **dadurch gekennzeichnet, dass** der heckseitige Rahmenabschnitt (15) an einem Zwischenrahmenabschnitt (40) mittels des Befestigungsflansches (21) befestigbar ist, wobei der Zwischenrahmenabschnitt (40) an dem frontseitigen Rahmenabschnitt (2), insbesondere der vertikalen Rahmenwand (10) des frontseitigen Rahmenabschnitt (2) mittels eines zum Befestigungsflansch (21) des heckseitigen Rahmenabschnittes (15) identischen Befestigungsflansches, befestigbar ist.

12. Schlepper nach Anspruch 11, **dadurch gekennzeichnet, dass** der Zwischenrahmenabschnitt (40) ein Ablagefach (41) aufweist, das mittels eines Deckels (42), insbesondere eines klappbaren Deckels, verschließbar ist.

13. Schlepper nach Anspruch 11 oder 12, **dadurch gekennzeichnet, dass** der Zwischenrahmenabschnitt (40) mit einer Auflagefläche (43) für eine Palette (44) versehen ist.

## Claims

1. Tractor (1) with a front frame section (2) on which a driving part (3) comprising at least one driving wheel, a battery compartment (4) for a power supply unit (5) and an operator's stand formed by a driver's platform (6) are formed, **characterized in that** a rear frame section (15) is provided, said frame section being provided with a fastening flange (16) for a trailer hitch (17a; 17b) and fastening flanges (18) for wheel carriers (19) of rear wheels (20a; 20b), the rear frame section (15) being provided with a fastening flange (21) for the direct or indirect fastening of the rear frame section (15) to the front frame section (2).

2. Tractor according to Claim 1, **characterized in that** the side walls of the rear frame section (15) are designed as mudguards (22) for the rear wheels (20a; 20b).

3. Tractor according to Claim 1 or 2, **characterized in that** a respective fastening flange (23) for a foot protector (24) of the rear wheels (20a; 20b) is formed in the region of the side walls.

4. Tractor according to one of Claims 1 to 3, **characterized in that** the fastening flange (21) for the direct or indirect fastening to the front frame section (2) is formed by at least one upper fastening point (25a; 25b) and at least one lower fastening point (25c; 25d).

5. Tractor according to Claim 4, **characterized in that** each fastening point (25a; 25b; 25c; 25d) has at least one threaded bore (26a; 26b; 26c; 26d) for a screw connection.

6. Tractor according to one of Claims 1 to 5, **characterized in that** the fastening flange (16) for the trailer hitch (17a; 17b) is formed by two laterally spaced-apart, vertical fastening strips (35a, 35b).

7. Tractor according to Claim 6, **characterized in that** each fastening strip (35a, 35b) has at least one threaded bore (36a, 36b) for a screw connection.

8. Tractor according to one of Claims 1 to 7, **characterized in that** the fastening flange (18) for the wheel carriers (19) in each case has a fastening ring (30) which has at least one threaded bore for a screw connection.

9. Tractor according to one of Claims 1 to 8, **characterized in that** the rear frame section (15) is designed as a cast component.

10. Tractor according to one of Claims 1 to 9, **characterized in that** the rear frame section (15) can be fastened to a vertical frame wall (10) of the front frame section (2) by means of the fastening flange (21).

11. Tractor according to one of Claims 1 to 9, **characterized in that** the rear frame section (15) can be fastened to an intermediate frame section (40) by means of the fastening flange (21), the intermediate frame section (40) being fastenable to the front frame section (2), in particular the vertical frame wall (10) of the front frame section (2), by means of a fastening flange which is identical to the fastening flange (21) of the rear frame section (15).

12. Tractor according to Claim 11, **characterized in that** the intermediate frame section (40) has a storage compartment (41) which can be closed by means of a cover (42), in particular a hinged cover.

13. Tractor according to Claim 11 or 12, **characterized in that** the intermediate frame section (40) is provided with a supporting surface (43) for a pallet (11).

## Revendications

1. Tracteur (1) avec une partie de châssis du côté avant (2), sur laquelle sont installés au moins une partie d'entraînement (3) comprenant une roue motrice, un logement de batterie (4) pour une unité d'alimentation en énergie (5) et un poste de conduite formé par une plate-forme de conduite (6) pour un conducteur, **caractérisé en ce qu'**il est prévu une partie de châssis du côté arrière (15), qui est pourvue d'une bride de fixation (16) pour un dispositif d'accrochage (17a; 17b) ainsi que de brides de fixation (18) pour des supports de roue (19) pour des roues arrière (20a; 20b), la partie de châssis du côté arrière (15) étant pourvue d'une bride de fixation (21) pour la fixation directe ou indirecte de la partie de châssis du côté arrière (15) à la partie de châssis du côté avant (2).

2. Tracteur selon la revendication 1, **caractérisé en ce que** les parois latérales de la partie de châssis du côté arrière (15) constituent des tôles de protection (22) des roues arrière (20a; 20b).

3. Tracteur selon la revendication 1 ou 2, **caractérisé en ce qu'**une bride de fixation (23) pour une protection de pied (24) des roues arrière (20a; 20b) est formée chaque fois dans la région des parois latérales.

4. Tracteur selon l'une quelconque des revendications 1 à 3, **caractérisé en ce que** la bride de fixation (21) pour la fixation directe ou indirecte à la partie de châssis du côté avant (2) est formée par au moins un point de fixation supérieur (25a; 25b) et au moins un point de fixation inférieur (25c; 25d).

5. Tracteur selon la revendication 4, **caractérisé en ce que** chaque point de fixation (25a; 25b; 25c; 25d) présente au moins un alésage fileté (26a; 26b; 26c; 26d) pour un assemblage vissé.

6. Tracteur selon l'une quelconque des revendications 1 à 5, **caractérisé en ce que** la bride de fixation (16) pour le dispositif d'accrochage (17a; 17b) est formée par deux barres de fixation verticales (35a, 35b) latéralement espacées.

7. Tracteur selon la revendication 6, **caractérisé en ce que** chaque barre de fixation (35a, 35b) présente au moins un alésage fileté (36a, 36b) pour un assemblage vissé.

8. Tracteur selon l'une quelconque des revendications 1 à 7, **caractérisé en ce que** la bride de fixation (18) pour les supports de roue (19) comprend chaque fois une couronne de fixation (30), qui présente au moins un alésage fileté pour un assemblage vissé.

9. Tracteur selon l'une quelconque des revendications 1 à 8, **caractérisé en ce que** la partie de châssis du côté arrière (15) est formée par un composant moulé.

10. Tracteur selon l'une quelconque des revendications 1 à 9, **caractérisé en ce que** la partie de châssis du côté arrière (15) peut être fixée à une paroi de châssis verticale (10) de la partie de châssis du côté avant (2) au moyen de la bride de fixation (21).

11. Tracteur selon l'une quelconque des revendications 1 à 9, **caractérisé en ce que** la partie de châssis du côté arrière (15) peut être fixée à une partie de châssis intermédiaire (40) au moyen de la bride de fixation (21), la partie de châssis intermédiaire (40) pouvant être fixée à la partie de châssis du côté avant (2), en particulier à la paroi de châssis verticale (10) de la partie de châssis du côté avant (2), au moyen d'une bride de fixation identique à la bride de fixation (21) de la partie de châssis du côté arrière (15).

12. Tracteur selon la revendication 11, **caractérisé en ce que** la partie de châssis intermédiaire (40) présente un casier de dépôt (41), qui peut être fermé au moyen d'un couvercle (42), en particulier d'un couvercle rabattable.

13. Tracteur selon la revendication 11 ou 12, **caractérisé en ce que** la partie de châssis intermédiaire (40) est munie d'une surface de dépôt (43) pour une palette (44).
